# FASCICULE DE BREVET EUROPEEN

(11) **EP 3 083 392 B1**
(45) Date de publication et mention de la délivrance du brevet: **04.07.2018**
(21) Numéro de dépôt: 14827508.4
(22) Date de dépôt: 12.12.2014
(51) Int. Cl.: B63B 35/44, B63B 35/34

(54) **DISPOSITIF FLOTTANT SUPPORT DE PANNEAU PHOTOVOLTAIQUE**
SCHWEBENDE TRÄGERVORRICHTUNG FÜR EIN FOTOVOLTAIKMODUL
FLOATING SUPPORT DEVICE FOR A PHOTOVOLTAIC PANEL

(30) Priorité: 16.12.2013 FR 1362700
(43) Date de publication de la demande: 26.10.2016
(73) Titulaire: Ciel et Terre International, 59262 Sainghin en Melantois (FR)
(72) Inventeur: GAVEAU, Alexis, F-59491 Villeneuve d'Ascq (FR)
(74) Mandataire: Bureau Duthoit Legros Associés
(86) Numéro de dépôt international: PCT/FR2014/053323
(87) Numéro de publication internationale: WO 2015/092237

(56) Documents cités:
- WO-A1-2013/116897
- WO-A2-2010/064105
- WO-A2-2012/139998
- DE-A1-102012 100 759
- JP-A- H08 167 729
- JP-A- 2001 189 486

## Description

L'invention est relative à un dispositif flottant, support de panneau(x) photovoltaïque(s), ainsi qu'un système flottant résultant de l'assemblage de dispositifs flottants.

Le domaine de l'invention est celui des installations photovoltaïques flottantes, et plus particulièrement des installations photovoltaïques flottantes résultant de l'assemblage de dispositifs flottants, support de panneau(x), de conception modulaire.

De tels dispositifs, modulaires, peuvent être assemblés sur site, rapidement, en alignant les panneaux photovoltaïques d'une même rangée, et bien souvent en constituant plusieurs rangées de panneaux photovoltaïques.

L'état de la technique connaît, par exemple, du document US 2008/0029148 A1 une installation résultant de l'assemblage de dispositifs flottants support de panneaux, de conception modulaire.

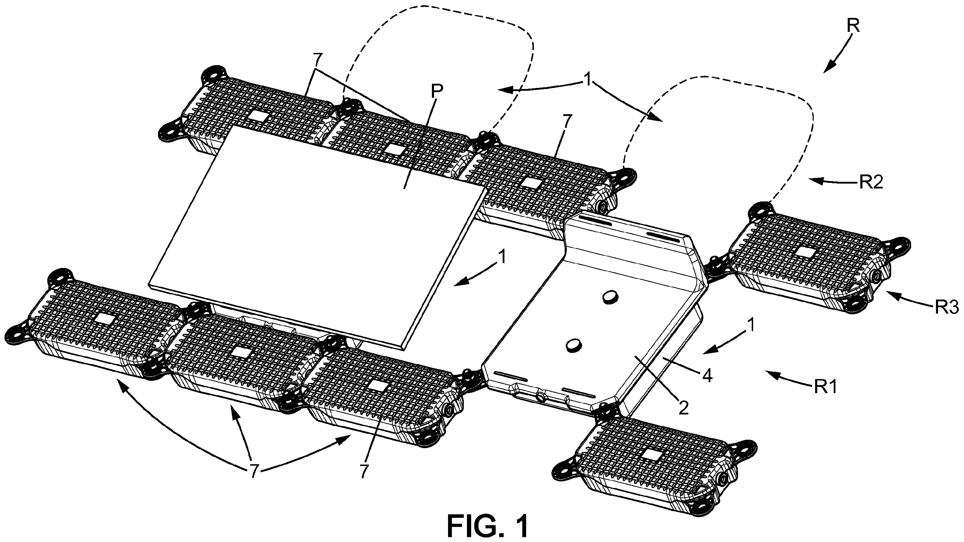

Chaque dispositif flottant, modulaire, tel qu'illustré à la figure 1 de cette antériorité, comprend, deux flotteurs allongés, cylindriques, ainsi qu'une structure autoportante résultant d'un assemblage de tubes soudés entre eux.

Quatre tubes de la structure s'étendent longitudinalement, respectivement, dans le prolongement des extrémités des flotteurs, les extrémités terminales de ces tubes étant pourvues d'anneaux d'extrémité.

L'assemblage de l'installation photovoltaïque flottante est obtenu, selon la direction des flotteurs allongés, par le couplage direct des anneaux d'extrémité d'un dispositif flottant aux anneaux d'extrémité d'un dispositif modulaire adjacent.

Le dispositif flottant comporte quatre autres anneaux de couplage supplémentaires, latéraux, pour assurer l'assemblage des dispositifs flottants voisins, selon la direction perpendiculaire.

L'assemblage de l'installation photovoltaïque flottante est obtenu, selon la direction perpendiculaire aux flotteurs allongés, par le couplage des anneaux latéraux d'un dispositif flottant aux anneaux latéraux d'un dispositif modulaire, adjacent, par l'intermédiaire de pièces de raccordement.

Cette structure permet le support de deux panneaux photovoltaïques, montés rotatifs par rapport à la structure.

La fabrication de tels dispositifs, modulaires, enseignés par cette antériorité, nécessite la réalisation, d'une structure résultant de l'assemblage de tubes, typiquement un mécano-soudé. Selon les constatations de l'inventeur, une telle conception n'est pas économiquement intéressante, de par son coût de fabrication trop élevé.

L'homme de l'art connait également du document WO2012/139998 une installation résultant de l'assemblage de dispositifs flottants, supports de panneau, de conception modulaire et d'éléments de raccordement, eux-mêmes sous forme de flotteurs. Les dispositifs supports et les éléments de raccordement sont destinés à être assemblés pour former un réseau de flotteurs.

Selon cette conception modulaire, chaque dispositif support de panneau, modulaire, est constitué essentiellement d'une enveloppe plastique qui porte plusieurs fonctions et, en particulier :
- une fonction de flotteur : l'enveloppe plastique renferme de manière étanche un volume d'air permettant d'assurer la flottaison du dispositif,
- éventuellement, une fonction d'élément pour incliner le panneau photovoltaïque : sa paroi supérieure est inclinée par rapport à sa paroi inférieure de manière à assurer l'inclinaison du panneau photovoltaïque par rapport au plan d'eau, et
- une fonction d'élément de structure: l'enveloppe plastique constitue la structure par laquelle transitent les efforts du réseau de flotteurs.

L'enveloppe plastique multifonction de ce dispositif modulaire est typiquement obtenue par roto moulage ou par extrusion-soufflage, d'un seul tenant, ce qui réduit les coûts par rapport à la structure mécano-soudée du dispositif du document US 2008/0029148 A1.

L'homme de l'art connaît encore, du document WO2011/094803, une installation résultant de l'assemblage de dispositifs flottants, supports de panneaux, de conception modulaire, assemblés directement entre eux pour constituer un réseau de flotteurs.

Selon cette conception modulaire, chaque dispositif comprend un flotteur, semble-t-il constitué par une enveloppe, et des supports permettant d'incliner le panneau photovoltaïque par rapport au flotteur.

L'enveloppe forme des éléments de couplage, repérés 16 à 22 qui permettent l'assemblage entre eux des flotteurs.

L'enveloppe porte plusieurs fonctions, à savoir:
- une fonction de flotteur et,
- une fonction de structure intermédiaire : l'enveloppe constitue la structure par laquelle transitent les efforts du réseau de flotteurs.
La fonction d'incliner le panneau par rapport à la surface de l'eau est assurée par des éléments distincts des flotteurs.

Dans les documents WO2012/139998 ou encore WO2011/094803, l'enveloppe doit être suffisamment résistante pour permettre de résister aux efforts du réseau. Selon les constatations de l'inventeur, il est nécessaire, en pratique, d'augmenter la résistance de cet élément en prévoyant une épaisseur de paroi supérieure à celle qui serait nécessaire pour assurer uniquement la fonction de flotteur.

L'extrusion soufflage d'une enveloppe plastique, de forme complexe, tel qu'enseigné par le document WO2012/139998 est réalisable et a été fabriquée par le demandeur. Toutefois, elle nécessite de la part du fabricant extrudeur un savoir-faire important, afin d'obtenir une épaisseur de paroi relativement uniforme sur toute la surface de l'enveloppe, tout en limitant la consommation de plastique.

Selon les constatations des inventeurs, un autre inconvénient des dispositifs des documents WO2012/139998 et WO2011/094803 est celui du transport sur le site de pose de ses éléments constitutifs, et en particulier des éléments flotteurs, pièces semi-rigides ou rigides, qui sont d'encombrement important.

L'homme de l'art connaît encore, du document DE 10 2012 100759 A1 un équipement qui comprend des panneaux solaires, et une pluralité de dispositifs flottants modulaires, chacun supportant un unique panneau solaire, aptes à constituer un réseau de dispositifs flottants.

Le corps du flotteur est en mousse tel que le polystyrène expansé, et présente des oreilles de couplage à ses quatre coins, connectées en elles par deux bandes métalliques en acier inoxydable ou en textile métallique.

Les dispositifs modulaires sont destinés à être assemblés par leur partie de couplage pour former le réseau de dispositif flottant.

La structure qui permet le transfert des efforts du réseau est prévu en insert dans le corps du flotteur, lors de la fabrication du flotteur : de par cette conception elles sont indémontables.

Le but de la présente invention est de proposer un dispositif support de panneau, de conception modulaire, de coût de fabrication maitrisé et de fabrication simplifiée.

Un autre but de la présente invention est de proposer un système résultant de l'assemblage de dispositifs conformes à l'invention, et éventuellement d'éléments de raccordement eux-mêmes flottants.

Un autre but de la présente invention est de proposer, au moins selon un mode de réalisation, un tel dispositif support, ou encore de proposer un équipement pour la réalisation dont la conception permet de faciliter leur transport jusqu'au site de pose, et en particulier de faciliter le transport des flotteurs sur site.

D'autres buts et avantages apparaitront au cours de la description qui n'est donnée qu'à titre indicatif et qui n'a pas pour but de la limiter.

L'invention concerne un équipement conforme à la revendication 1 pour la réalisation d'une installation photovoltaïque comprenant des panneaux photovoltaïques, ainsi qu'une pluralité desdits dispositifs supports de panneau, modulaires, aptes à être assemblés pour former un réseau de dispositifs flottants pour le support des panneaux photovoltaïques.

Dans l'invention, la fonction d'élément permettant la transmission des efforts du réseau est portée uniquement par ladite structure de sorte que le ou les flotteurs, d'une part, et encore ledit au moins un panneau photovoltaïque porté par ce dispositif, d'autre part, soient isolés des efforts du réseau.

Il est ainsi possible de dimensionner le ou chacun desdits flotteurs, de préférence, en plastique, formé par une enveloppe d'épaisseur de paroi relativement faible, par exemple, inférieure ou égale à 2 mm.

Ladite structure destinée à assurer la transmission des efforts du réseau peut être un élément plastique, par exemple d'un seul tenant. Cette structure peut être fabriquée par moulage, en particulier moulage par injection, ou autres procédés de transformation du plastique. Cette structure devant résister aux efforts du réseau, l'épaisseur de paroi peut être supérieure ou égale à 3 mm, de préférence supérieure à 10 mm, au moins au niveau des éléments de couplage.

Selon un mode de réalisation, l'élément plastique de la structure est un corps creux, de préférence étanche. Alternativement ou additionnellement, l'élément plastique est un corps ajouré, par exemple grillagé. Une telle conception de l'élément en creux et/ajouré, permet de limiter la consommation de plastique et donc de limiter le coût du dispositif, voire de le rigidifier.

Selon un autre mode de réalisation, ladite structure résulte de l'assemblage de plusieurs éléments, de préférence de manière amovible. Lesdits éléments sont de préférence assemblés par un système de vissage, un système de clipsage, ou encore un système de sangle ou tout autre système permettant un assemblage rapide des éléments pour réaliser ladite structure.

Selon l'invention, la structure et le ou les flotteurs sont solidarisés mutuellement par un système de vissage, un système de sangle, ou encore un système de clipsage. Les systèmes de fixation assurent un assemblage rapide, de manière amovible, et de préférence sans outil entre la structure et le ou les flotteurs sont privilégiés.

Selon un mode de réalisation, lesdits éléments de couplage à d'autres dispositifs flottants peuvent être des oreilles saillantes, de préférence sensiblement horizontales. Dans le cas où ladite structure résulte de l'assemblage de plusieurs éléments, ces oreilles peuvent cumuler, outre leur fonction d'éléments pour l'assemblage du dispositif support à d'autres dispositifs flottants, une fonction d'élément pour l'assemblage de tout ou partie des éléments de la structure.

A cet effet tout ou partie desdits éléments de ladite structure comprennent lesdites oreilles, tout ou partie des éléments étant assemblés entre eux par l'intermédiaire d'oreilles, en regard, appartenant à au moins deux éléments, distincts, desdits éléments de la structure, et par l'intermédiaire d'organe de verrouillage, tel qu'un boulon, traversant lesdites oreilles.

Selon des caractéristiques optionnelles de l'invention, prises seules ou en combinaison :
- la structure est prévue débordante, latéralement, par rapport au(x)dit(s) flotteur(s) et de préférence de manière continue sur le pourtour dudit ou desdits flotteurs;
- le dispositif présente un ou plusieurs éléments supports pour incliner ledit au moins un panneau photovoltaïque par rapport à la surface de l'eau, par exemple d'inclinaison comprise entre 10° et 30°,
- le ou chacun desdits flotteurs est constitué par une enveloppe plastique, renfermant un volume d'air, ou alternativement,
- le ou chacun desdits flotteurs est un élément gonflable.

Encore selon un autre mode de réalisation, le ou chacun des flotteurs comprend un corps semi-ouvert, étanche, en tronc de cône ou alternativement en tronc de pyramide, solidarisé à la structure de manière à former une poche ouverte vers le bas, piégeant un volume d'air. Un tel mode de réalisation facilite grandement le transport des flotteurs dont les corps semi-ouverts, de forme tronconique ou en tronc de pyramide peuvent être avantageusement empilés les uns dans les autres, lors du transport, et n'être assemblés à leur structure que dans un second temps, par exemple directement sur le site de pose.

Selon un mode de réalisation, le ou les flotteurs sont solidarisés à la structure, en appui sur la sous-face de ladite structure, notamment au moyen d'un système de fixation du type amovible (système vis/écrou, clips réversible, sangle).

Selon l'invention, le dispositif support est conçu pour le maintien d'un unique panneau photovoltaïque, lesdits éléments de maintien étant agencés de manière à permettre le montage du panneau photovoltaïque débordant latéralement, notamment des deux côtés dudit dispositif.

Une telle conception participe, encore, à diminuer la consommation de matière notamment de plastique, nécessaire à la fabrication du dispositif, et ainsi à limiter son coût.

L'invention concerne également un équipement pour la réalisation d'une installation photovoltaïque comprenant une pluralité desdits dispositifs supports de panneau, modulaires, conformes à l'invention.

Les dispositifs supports de panneau, modulaires de l'équipement sont destinés à être assemblés entre eux pour former un réseau de dispositifs flottant, soit directement par assemblage de leurs éléments de couplage, soit indirectement par l'intermédiaire de leurs éléments de couplage et d'éléments de raccordement, intermédiaires.

Selon des caractéristiques optionnelles de l'équipement, prises seules ou en combinaison :
- l'équipement comprend, en outre, des éléments de raccordement, modulaires, flottants, ledit équipement présentant des éléments de couplage répartis entre lesdits éléments de raccordement et lesdits dispositifs supports permettant l'assemblage entre eux desdits éléments de raccordement et desdits dispositifs supports ;
- chaque élément de raccordement flottant est sous forme d'une enveloppe plastique présentant un volume intérieur permettant d'assurer la flottaison dudit élément de raccordement, ladite enveloppe plastique présentant lesdits éléments de couplage, ou alternativement ;
- chaque élément de raccordement comprend, d'une part, une structure comportant lesdits éléments de couplage aux dispositifs flottants de manière à permettre la formation d'un réseau de dispositifs flottants et d'autre part, un ou plusieurs flotteurs, destiné(s) à assurer la flottaison du dispositif, solidarisé(s) à ladite structure : ladite structure est alors un élément distinct du ou desdits flotteurs de telle façon à permettre la transmission des efforts entre les dispositifs flottants du réseau, sans transmettre les efforts du réseau au(x)dit(s) flotteurs ;
- les éléments de couplage sont des oreilles saillantes, ledit équipement comprenant des organes de verrouillage tels que goupilles ou boulons, chaque organe de verrouillage étant destiné à traverser plusieurs oreilles mises en regard pour assurer le verrouillage de l'assemblage.

L'invention concerne également un système résultant de l'assemblage de dispositifs supports de l'équipement conforme à l'invention, directement par l'intermédiaire de leurs éléments de couplage, ou indirectement par l'intermédiaire de leurs éléments de couplage et d'éléments de raccordement, intercalaires obtenant un réseau de dispositif flottant.

Selon un mode de réalisation, ledit système comporte lesdits éléments de raccordement, ledit système présentant au moins deux rangées de dispositifs supports de panneau conformes à l'invention, lesdites deux rangées étant maintenues au moyen d'une rangée d'éléments de raccordement, intercalaire : cette rangée d'éléments de raccordement permet éventuellement de constituer un couloir de maintenance, continue ou discontinue.

Selon un mode de réalisation, deux dispositifs supports consécutifs appartenant à une même rangée sont écartés et distants mutuellement au moyen d'un élément de raccordement, voire deux éléments de raccordement en parallèle, entretoisant lesdits dispositifs consécutifs.

Alternativement ou additionnellement, selon un mode de réalisation, deux dispositifs supports consécutifs appartenant à une même rangée peuvent être écartés et distants, mutuellement, au moyen d'au moins un dispositif support d'une rangée adjacente, entretoisant les deux dispositifs consécutifs.

Une telle configuration du réseau de dispositif permet de maintenir deux dispositifs supports de panneau consécutifs écartés et distants. Cela permet avantageusement le montage du panneau débordant par rapport au dispositif, suivant la direction de ladite rangée.
Encore selon un autre mode de réalisation, les structures desdits dispositifs supports peuvent être de dimension surabondante par rapport aux dimensions des panneaux photovoltaïques portés par les structures, configurées de sorte que les parties surabondantes des structures appartenant à une même rangée de dispositifs supports du réseau forment une allée de maintenance pour les opérateurs.

L'invention sera mieux comprise de la description accompagnée des figures en annexe parmi lesquelles :
- La figure 1 illustre un système résultant de l'assemblage de dispositifs supports de panneau selon l'invention et d'éléments de raccordement.
- La figure 2 est une vue de détail de la figure 1.
- La figure 3 illustre un second mode de réalisation de l'invention,
- La figure 4 illustre un troisième mode de réalisation de l'invention pour lequel la structure du dispositif résulte de l'assemblage de plusieurs éléments,
- La figure 5 est une variante du mode de réalisation de la figure 4,
- La figure 6 illustre un quatrième mode de réalisation pour lequel chaque élément de raccordement comprend, d'une part, une structure portant les éléments de couplage (i.e des oreilles) et, d'autre part, un flotteur assurant la flottaison dudit élément de raccordement,
- La figure 7 illustre un système conforme à l'invention selon un mode de réalisation, résultant de l'assemblage de dispositifs supports conformes à l'invention, directement par l'intermédiaire de leurs éléments de couplage (panneaux non apparents),
- La figure 8 est vue du système de la figure 7, les panneaux photovoltaïques étant représentés,
- La figure 9 représente encore un autre mode de réalisation de système conforme à l'invention,
- Les figures 10 à 14 représentent respectivement des vues en perspective, de face, de côté (gauche et droite) et de dessous, d'un cinquième mode de réalisation du dispositif conforme à l'invention de flotteurs à conception de type empilables,
- Les figures 15 à 19 sont des vues, respectivement, en perspective de dessous, en perspective de dessus, de face et de côté, d'un flotteur de conception ouverte et empilable, et utilisé dans un dispositif selon les figures 10 à 14,
- Les figures 20 et 21 sont des vues schématiques, partielles (flotteurs non illustrés) en perspective d'un système conforme à l'invention selon un autre mode de réalisation, respectivement sans et avec panneaux photovoltaïques, et dans lequel lesdites structure des dispositifs sont de dimensions surabondantes par rapport aux panneaux photovoltaïques, de sorte à créer une allée de maintenance.

Aussi, l'invention est relative à un dispositif 1 support de panneau photovoltaïque, flottant, comprenant :
- une structure 2 comportant des éléments de couplage 3 à d'autres dispositifs flottants de manière à permettre la formation d'un réseau R de dispositifs flottants,
- un ou plusieurs flotteurs 4, destiné(s) à assurer la flottaison du dispositif, solidarisé(s) à ladite structure 2,
- des éléments de maintien d'au moins un panneau photovoltaïque P.

Selon l'invention, ladite structure 2 est un élément distinct dudit ou desdits flotteurs 4 de telle façon à permettre la transmission des efforts entre les dispositifs flottants 1,7 (ou 1,7') du réseau R, sans transmettre les efforts du réseau R au(x)dit(s) flotteurs 4.Ce dispositif support 1 trouve une application particulière comme élément modulaire.

Selon l'invention, la fonction de flotteur, d'une part, et la fonction de structure permettant la transmission des efforts du réseau, selon les deux directions du réseau R, sont assurées par des éléments dissociés.

Il est ainsi possible de dimensionner le ou les flotteurs 4, de préférence, en plastique avec de faible épaisseur de matière. Le ou chacun des flotteurs 4 peut être formé par une enveloppe plastique d'épaisseur de paroi relativement faible, par exemple, inférieure ou égale à 2mm. Le ou les flotteurs, semi-rigide(s) peuvent être obtenus par extrusion-soufflage, roto-moulage ou autre. Chaque flotteur comprend une enveloppe étanche, renfermant un volume d'air. Une telle solution de flotteur illustrée des figures 1 à 9 présente toutefois pour inconvénient un encombrement important des flotteurs, ce qui ne facilite pas leur transport sur site. Selon une autre variante (non illustrée) le ou chacun des flotteurs peut être un élément gonflable. Dans ce cas, le flotteur comprend au moins en partie une enveloppe souple destinée à contenir de manière étanche un volume d'air. Cet élément gonflable présente l'avantage de pouvoir être transporté à l'état dégonflé, notamment en plat, dans une position de moindre encombrement. Il peut être alors gonflé et/ou formé uniquement sur le site de pose de manière à renfermer un volume d'air assurant la flottaison.

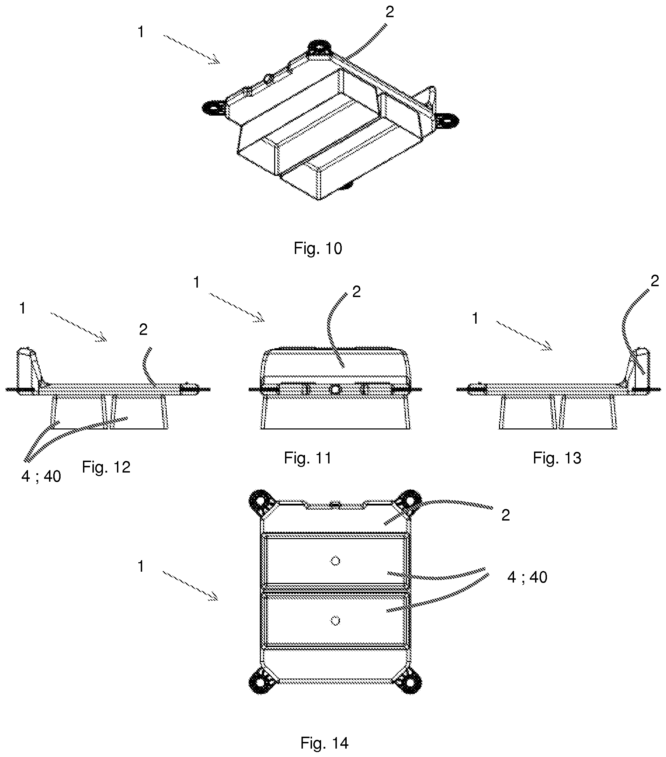

Encore selon un autre mode de réalisation illustré des figures 10 à 19, le ou chacun des flotteurs 4 comprend un corps 40 semi-ouvert, étanche, solidarisé à la structure de manière à former une poche ouverte vers le bas, piégeant un volume d'air. Un tel corps semi-ouvert peut être en matériau plastique, obtenu par exemple par thermoformage.

Un tel mode de réalisation facilite grandement le transport des flotteurs dont les corps semi-ouverts 40, de forme tronconique (non illustré) ou en tronc de pyramide (illustré) peuvent être avantageusement empilés les uns dans les autres, lors du transport, et n'être assemblés à leur structure que dans un second temps, par exemple directement sur le site de pose.

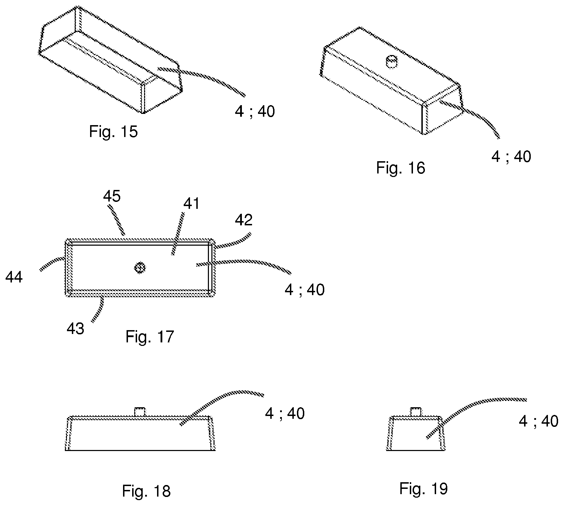

Le corps semi-ouvert peut être de forme circulaire (alors en tronc de cône) ou encore polygonal notamment rectangulaire (en tronc de pyramide) tel qu'illustré à titre d'exemple aux figures 15 à 19. Dans le cas d'un tronc de pyramide, le corps semi ouvert peut ainsi comprendre une paroi supérieure 41, polygonale notamment sensiblement rectangulaire, ainsi que des parois latérales 42 à 45 notamment au nombre de quatre, formant les parois de la pyramide. Dans le cas d'un corps semi-ouvert de forme tronconique, la paroi supérieure est de forme circulaire, à savoir un disque, et la paroi latérale forme le tronc de cône.

Dans les deux cas, que le corps semi-ouvert soit un tronc de cône ou un tronc de pyramide, il est ouvert vers le bas, c'est-à-dire dépourvu de paroi inférieure de manière à ce que ce corps semi-ouvert soit empilable avec un, ou de préférence plusieurs corps semi-ouverts identiques du même type.

Lors de la mise à l'eau, une attention particulière est portée sur l'inclinaison des dispositifs afin de piéger de l'air dans le volume ouvert des flotteurs, en conservant une certaine horizontalité des dispositifs 1.

Ladite structure 2 destinée à assurer la transmission des efforts du réseau, présentant lesdits éléments de couplage, peut être un élément notamment plastique, de préférence d'un seul tenant. Une telle réalisation est illustrée, à titre d'exemple non limitatif, pour les modes de réalisation des figures 1 à 3 et 6.

Cette structure peut être fabriquée par moulage, en particulier rotomoulage, extrusion soufflage ou autres procédés de transformation du plastique. Cette structure devant résister aux efforts du réseau, l'épaisseur de paroi peut être supérieure ou égale à 3mm et de préférence supérieure ou égale à 10 mm au moins au niveau des éléments de couplage 3.

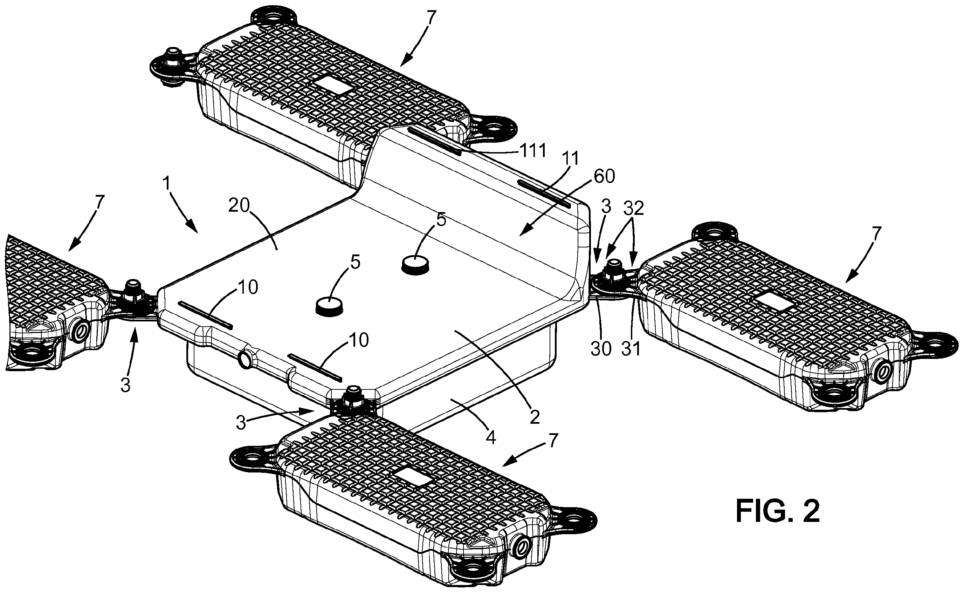

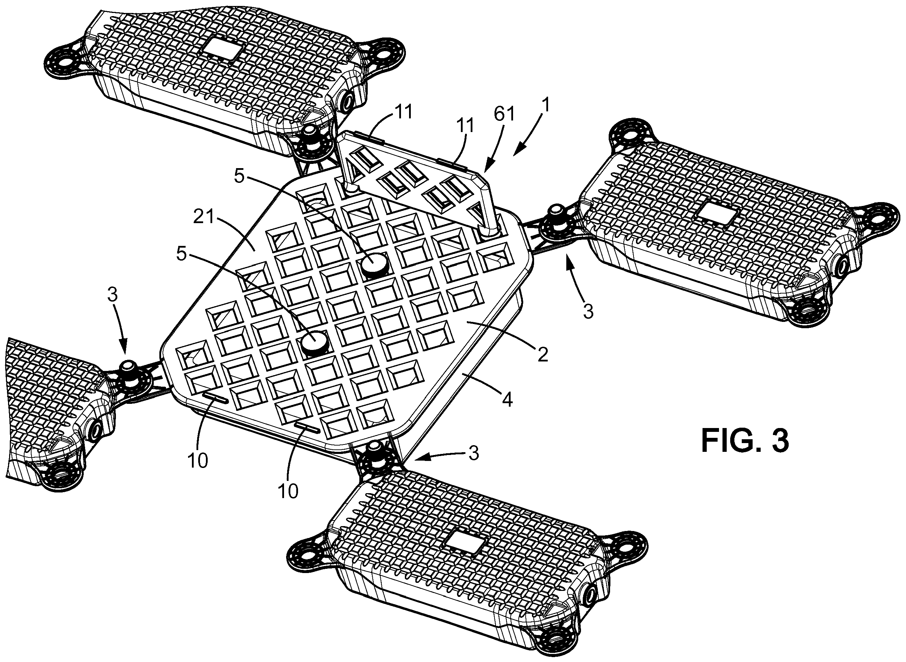

Afin de limiter la consommation de matière, ladite structure peut être un corps creux 20, par exemple tel qu'illustré non limitativement à la figure 2. Alternativement ou additionnellement, l'élément plastique peut-être un corps ajouré 21, par exemple grillagé, par exemple tel qu'illustré non limitativement à la figure 3.

Selon un mode de réalisation, lesdits éléments de couplage 3 peuvent être des oreilles 32 saillantes. Les éléments de couplage 3, notamment lesdites oreilles 32 peuvent être prévues aux quatre coins de la structure 2.

La structure 2 peut être, vue de dessus, de forme sensiblement rectangulaire telle qu'illustrée aux figures. Le ou les flotteurs 4 sont assujettis à la partie inférieure de la structure 2 par tous moyens adaptés, de préférence en appui sur la sous-face de ladite structure.

Toutefois, les systèmes de fixation permettant un assemblage rapide de la structure avec le ou les flotteurs, de préférence de manière amovible, et de préférence sans outil, sont privilégiés. Ces systèmes peuvent être choisis parmi un système de vissage 5, un système de sangle, ou encore un système de clipsage. Selon les exemples illustrés, deux vis 5 du système de vissage traversent deux alésages de la structure 2 et viennent s'engager avec des taraudages du flotteur 4. Selon un mode de réalisation, la structure et le ou les flotteur(s) peuvent être solidarisé(s) par toute autre technique, telle que collage, soudage...

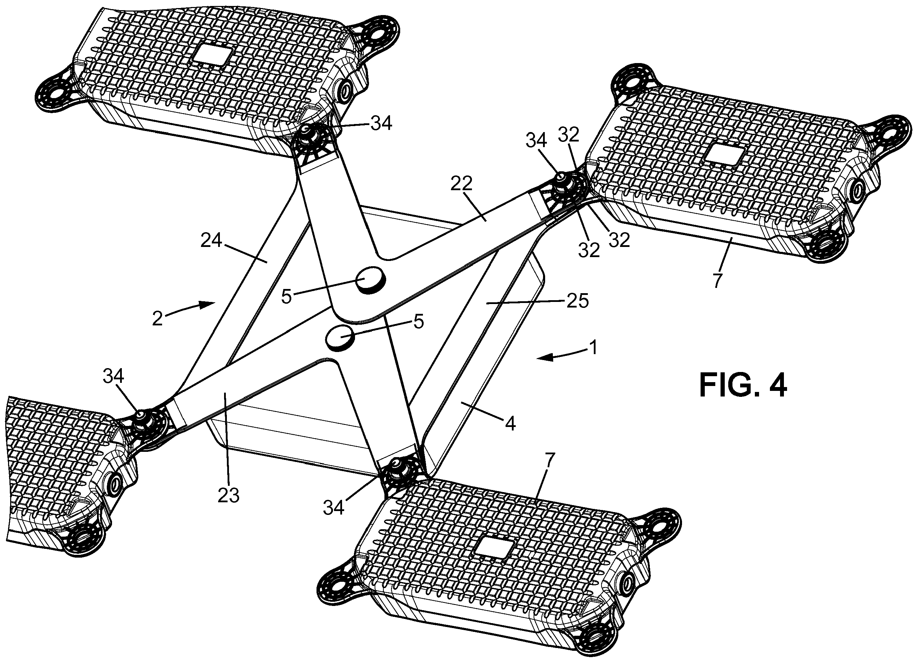

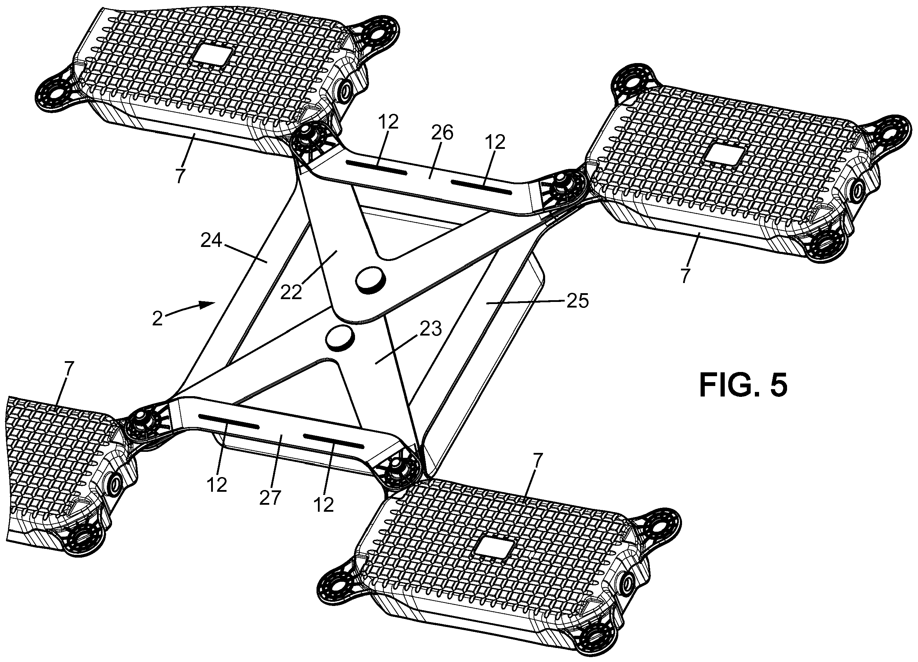

Alternativement, et selon un mode de réalisation illustré non limitativement aux figures 4 et 5, ladite structure 2 résultent de l'assemblage de plusieurs éléments 22, 23, 24, 25, 26,27 Ces éléments 22, 23, 24, 25,26, 27 peuvent être en plastique, par exemple obtenus par moulage, notamment moulage par injection.

Lesdits éléments 22, 23, 24, 25 peuvent être assemblés par système de vissage, un système de clipsage, ou encore un système de sangle ou tout autre système permettant un assemblage rapide sur site.

Les modes de réalisation des figures 4 et 5 utilisent un système de vissage (des boulons 34) pour permettre l'assemblage des éléments 22, 23, 24 et 25, voire 26 et 27 de la structure 2.

Selon ce mode de réalisation avantageux, des organes de verrouillage 34 tels que des boulons permettent non seulement l'assemblage des éléments 22, 23, 24, 25, voire 26, 27 de la structure 2, mais coopèrent également avec les oreilles 32 de dispositifs flottants voisins afin d'assurer le couplage du dispositif support 1 avec les dispositifs flottants voisins du réseau R.

De manière générale, tout ou partie desdits éléments 22, 23, 24, 25 de ladite structure 2 peuvent comprendre lesdites oreilles 3, tout ou partie des éléments 22, 23 ,24, 25 étant assemblés entre eux par l'intermédiaire d'oreilles 32, en regard, appartenant à au moins deux, distincts, desdits éléments 22,25 ;23,25 ;23,24 ;22,24, et par l'intermédiaire d'un organe de verrouillage 34, tel qu'un boulon, traversant lesdites oreilles 32.

Plus particulièrement, la structure 2 du mode de réalisation de la figure 4 comprend quatre éléments 22, 23, 24, 25. Les quatre éléments 22, 23, 24, 25 comportent chacun deux oreilles 32. Les éléments sont assemblés entre eux, deux à deux, en mettant en regard deux des oreilles 32 appartenant à deux éléments distincts 22,25 ; 23,25 ; 23,24 ; 22,24 et par la mise en place de l'organe de verrouillage 34, tel qu'un boulon 34, traversant les deux oreilles 32.
Selon le mode de réalisation illustré, les éléments 22 et 23 sont en forme de V, vue de dessus, agencés tête-bêche de manière à former un X et sont respectivement fixés au flotteur 4, notamment par vissage, au niveau de leur partie médiane. Les extrémités du V sont pourvues respectivement desdites oreilles 32.

Les deux autres éléments 24 et 25 sont des éléments longilignes pourvus chacun d'oreilles 32 à leur deux extrémités. Chaque élément 24 ou 25 relie les deux éléments en forme de V, 22 et 23, les deux oreilles de chaque élément 24 et 25 étant mises en regard respectivement avec deux oreilles 32 appartenant aux éléments 22 et 23 et reliées à ces dernières au moyen d'organes de verrouillage 34 tels que des boulons. Ce même organe de verrouillage 34 traverse et maintient une oreille 32 d'un dispositif flottant voisin, repéré 7. Les éléments d'assemblage de la structure 2 s'étendent de préférence, selon un plan au dessus du ou des flotteurs.

Selon un mode de réalisation, le flotteur 4 peut être unique, notamment de forme parallélépipédique. La structure 2 est alors assujettie de préférence sur la face supérieure de ce flotteur.

Selon un mode de réalisation, la structure 2 est prévue débordante, latéralement, par rapport au(x)dit(s) flotteurs 2.

Prévoir la structure 2 en saillie, latéralement par rapport au(x)dits flotteur(s) permet de protéger le ou les flotteurs en cas de collision. Par exemple sur les figures, la structure 2 déborde latéralement, et de préférence de manière continue sur le pourtour du flotteur, des quatre côtés du flotteur 4, et non seulement au niveau des éléments de couplage, en particulier des oreilles.

Selon un mode de réalisation, ledit dispositif présente un ou plusieurs éléments support 60, 61 pour incliner ledit au moins un panneau photovoltaïque P par rapport à la surface de l'eau. Cet élément permet d'incliner le panneau photovoltaïque par rapport au plan d'eau, notamment d'un angle compris entre 10° et 30°

Cet élément support 60 peut comprendre, ou être constitué par ledit élément formant ladite structure 2, ou encore comprendre ou être constitué par un ou plusieurs éléments distincts.

Par exemple, selon le mode de réalisation des figures 1 et 2, ladite structure 2, formée par un élément plastique d'un seul tenant, présente au moins une nervure de fixation 10, basse, et au moins un nervure de fixation 11, haute, à un niveau supérieur, qui permettront l'inclinaison du panneau photovoltaïque P.

Selon un autre mode de réalisation illustré à la figure 3 la structure 2 présente au moins une nervure de fixation 10, basse. Au moins une nervure de fixation 11, haute est prévue sur un élément support 61, distinct de la structure 2, à un niveau supérieur. Ces nervures 10 et 11 permettent l'inclinaison du panneau photovoltaïque P.

Ces nervures de fixation 10,11 permettent la mise en place d'éléments de maintien du dispositif de fixation de panneau photovoltaïque, enseigné par le document WO2013/153329, du présent demandeur en enfilant lesdites nervures 10 et 11, respectivement, dans des rainures de fixation complémentaires desdits éléments de maintien. L'élément de maintien enfilé sur la nervure basse 10 permet de maintenir le panneau par l'un de ses côtés et l'élément de maintien enfilé sur la nervure haute 11 permet de maintenir le panneau de l'autre de ses côtés.

Aussi, d'une manière générale, les éléments de maintien peuvent être ceux décrits dans le dispositif de fixation du document WO2013/153329A, qui est incorporé par référence. De tels éléments permettent avantageusement de maintenir le panneau photovoltaïque P seulement par ses deux côtés, et permettent un montage du panneau photovoltaïque, débordant par rapport au dispositif support 1.

Selon le mode de réalisation de la figure 5, la structure 2 résulte de l'assemblage de plusieurs éléments 22, 23, 24, 25, 26, 27 notamment par l'intermédiaire de leurs oreilles 32 et d'organes de verrouillage 34 tels que des boulons.

Certains des éléments peuvent présenter des nervures pour la mise en place d'éléments de maintien du dispositif du document WO2013/153329A. Par exemple, l'élément 26 présente au moins une nervure 12, pour la mise en place d'un élément de maintien destiné à maintenir un coté d'un panneau. Un autre élément 27, opposé, présente une nervure 12 pour la mise en place d'un élément de maintien destiné à maintenir l'autre côté du panneau.

Toutefois, les éléments de maintien peuvent prendre d'autres formes connues par l'homme du métier. L'homme du métier peut ainsi utiliser d'autres dispositifs de fixation connus pour les éléments de maintien, et en particulier des systèmes de pince, des systèmes de fixation à vis, des systèmes clipsables, des systèmes à came ou tout autre système de fixation connu de l'homme du métier. Il s'agit toutefois, de préférence, d'un système de fixation, du type amovible, et afin de permettre le retrait du panneau photovoltaïque pour des opérations de maintenance. Selon un mode de réalisation avantageux, lesdits éléments de maintien sont agencés de manière à permettre le montage du panneau photovoltaïque P débordant latéralement des deux côtés dudit dispositif 1.

L'invention concerne également un équipement pour la réalisation d'une installation photovoltaïque comprenant une pluralité desdits dispositifs 1 supports de panneau, modulaires conformes à l'invention.

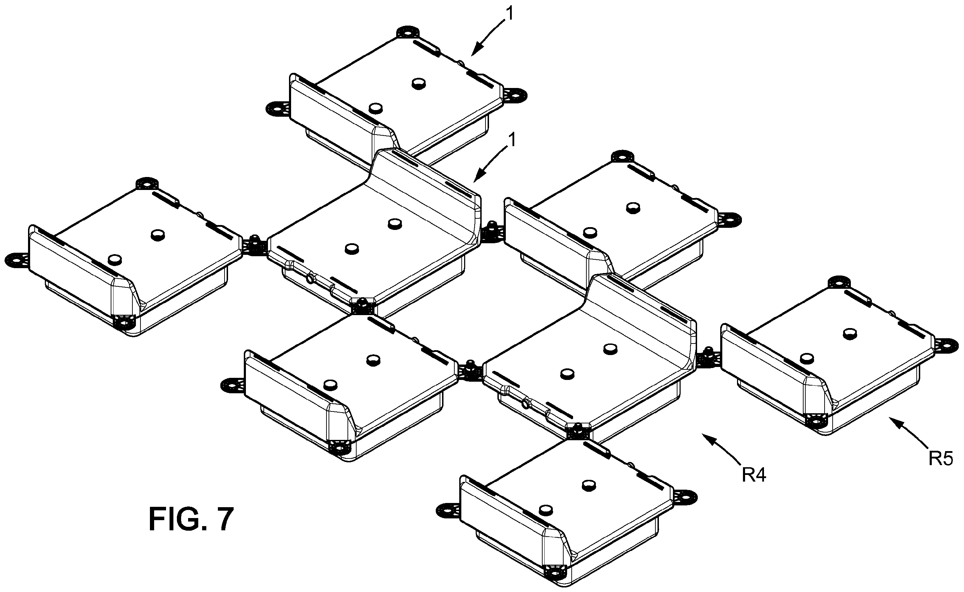

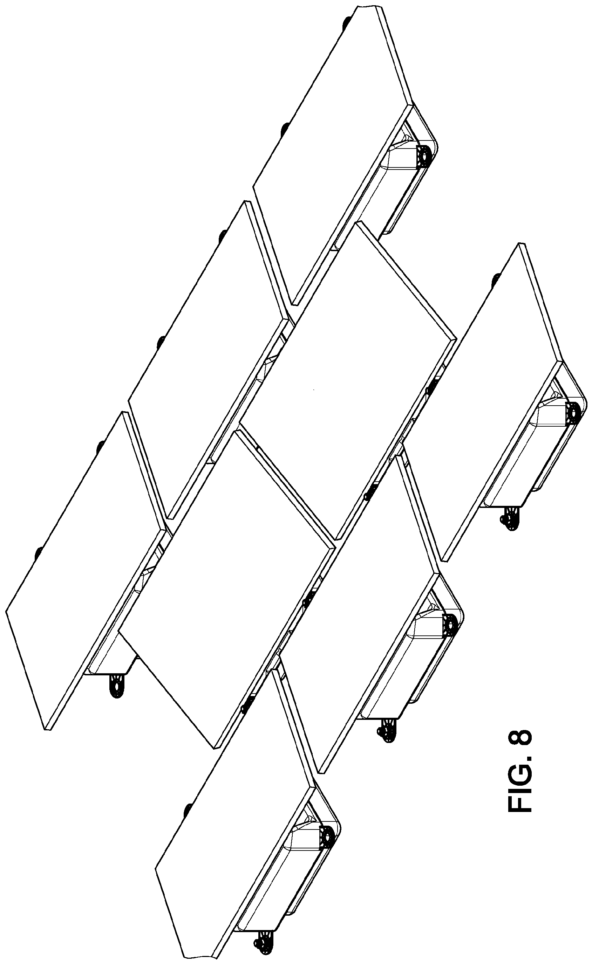

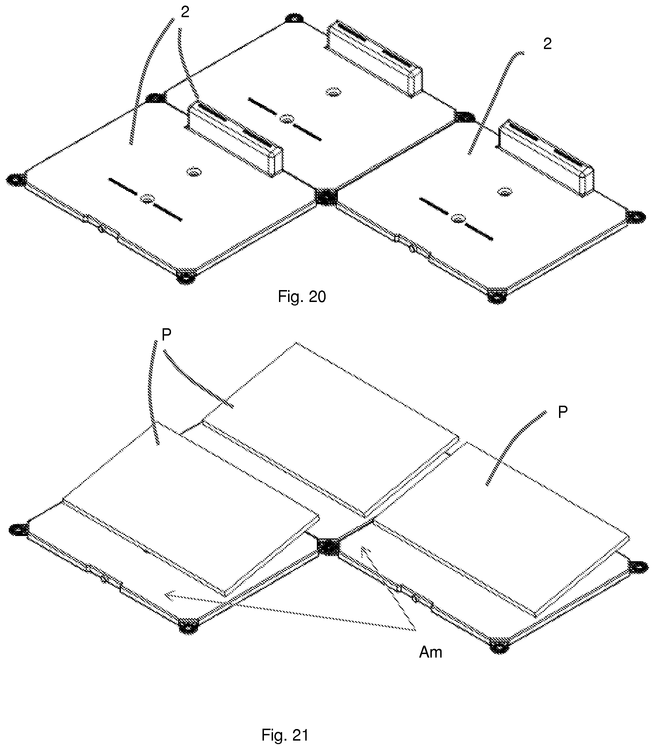

Les dispositifs 1 supports de panneau, modulaires, de l'équipement sont destinés à être assemblés entre eux pour former un réseau R de dispositif flottant 1,7 (ou 1,7'), soit directement par leurs éléments de couplage (voir figures 7, 8 ou encore les figures 20 et 21), soit indirectement par l'intermédiaire de leurs éléments de couplage et d'éléments de raccordement 7 ou 7'.

Les dispositifs 1,7 (ou 1,7') du réseau s'étendent suivant les deux directions du plan d'eau. Selon un mode de réalisation, et tel qu'illustré aux figures 20 et 21 (flotteurs non illustrés), les structures 2 desdits dispositifs peuvent être de dimension surabondante par rapport aux dimensions des panneaux photovoltaïques P portés par les structures 2. Les parties surabondantes des structures 2 du réseau forment ainsi et tel qu'illustré à titre d'exemple non limitatif à la figure 21 une allée de maintenance pour les opérateurs. En particulier les structures 2 sont configurées de sorte que les parties surabondantes des structures 2 appartenant à une même rangée de dispositifs supports du réseau forment une allée de maintenance pour les opérateurs. Un tel mode de réalisation trouve une application particulière lorsque les dispositifs 1 supports sont assemblés directement entre eux par leurs éléments de couplage 3.

Selon un mode de réalisation, l'équipement comprend ainsi, des éléments de raccordement 7 modulaires, et de préférence, flottants.

Par exemple chaque élément de raccordement peut se présenter sous la forme d'une enveloppe plastique. Cette enveloppe renferme un volume intérieur permettant d'assurer la flottaison dudit élément de raccordement. Cette enveloppe plastique dudit élément de raccordement peut présenter une paroi inférieure, une paroi supérieure et quatre parois latérales. L'enveloppe étanche dudit élément de raccordement 7 peut présenter une ouverture, fermée par un bouchon. L'enveloppe plastique, semi-rigide, dudit élément de raccordement 7 peut être obtenue par extrusion-soufflage, roto moulage.

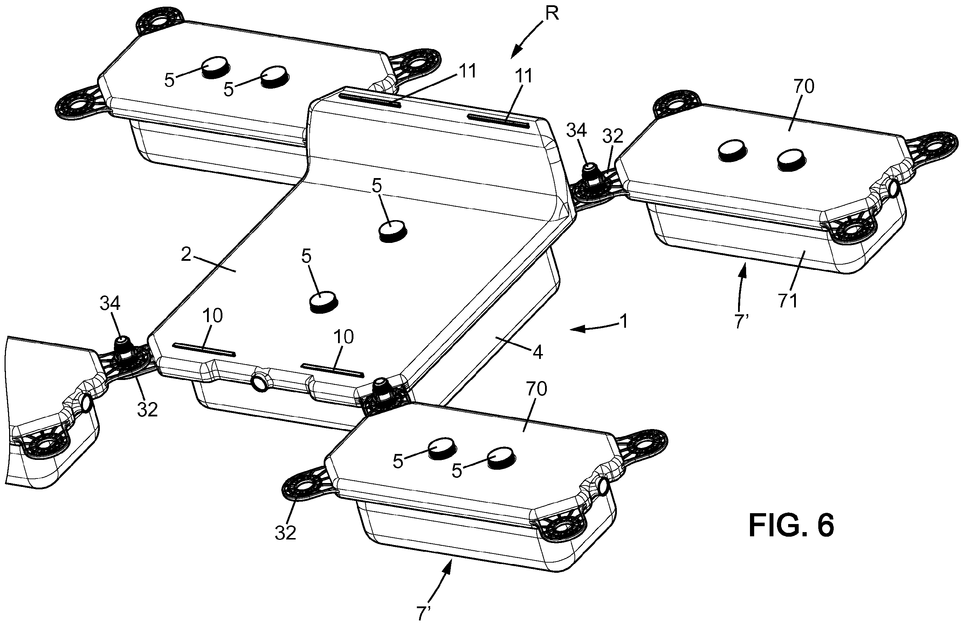

Alternativement et selon un mode de réalisation illustré à la figure 6, chaque élément de raccordement 7' comprend :
- une structure 70 comportant lesdits éléments de couplage 3 aux dispositifs flottants 1 de manière à permettre la formation d'un réseau R de dispositifs flottants,
- un ou plusieurs flotteurs 71, destiné(s) à assurer la flottaison du dispositif, solidarisé(s) à ladite structure 70.
Ladite structure 70 est avantageusement un élément distinct du ou desdits flotteurs 71 de telle façon à permettre la transmission des efforts entre les dispositifs flottants 1,7' du réseau R sans transmettre les efforts du réseau au(x)dit(s) flotteurs 71.

La structure 70 peut être un élément de préférence plastique et de préférence d'un seul tenant. Cette structure peut être fabriquée par moulage, rotomoulage, extrusion soufflage ou autres procédés de transformation du plastique. Cette structure devant résister aux efforts du réseau, l'épaisseur de paroi peut être supérieure ou égale à 3mm et de préférence supérieure ou égale à 10 mm au moins au niveau des éléments de couplage 3.Afin de limiter la consommation de matière, ladite structure peut être un corps creux, par exemple tel qu'illustré non limitativement à la figure 6. Alternativement ou additionnellement, l'élément plastique peut-être un corps ajouré, par exemple grillagé. Alternativement, la structure 70 peut résulter de l'assemblage de plusieurs éléments (non illustré), notamment par un système de vissage, un système de sangle ou encore un système de clipsage.

Selon un mode de réalisation, lesdits éléments de couplage 3 peuvent être des oreilles saillantes 32.

Le ou chacun des flotteurs 71 dudit élément de raccordement 7' peuvent être une enveloppe plastique, semi rigide ou encore être un élément gonflable.

L'équipement présente, en outre, des éléments de couplage 3 répartis entre lesdits éléments de raccordement 7 et les lesdits dispositifs support 1 permettant l'assemblage entre eux desdits éléments de raccordement 7 et desdits dispositifs supports 1.

Par exemple, les éléments de couplage 3 sont des oreilles 32 saillantes des dispositifs 1 et des oreilles 32 saillantes des éléments de raccordement. Ledit équipement comprend les organes de verrouillage 34 (des boulons), chaque organe étant destiné à traverser plusieurs oreilles mises en regard pour assurer le verrouillage de l'assemblage. Les oreilles 32 sont prévues de préférence aux quatre coins dudit élément de raccordement 7 ou 7'.

Eventuellement, des tampons élastomères peuvent être pris en sandwich entre les oreilles traversées par un même organe de verrouillage 34.

Le système résultant de l'assemblage des éléments modulaires de l'équipement peut présenter au moins deux rangées R1, R2 de dispositifs 1 supports conformes à l'invention, lesdites deux rangées étant éventuellement maintenues au moyen d'une rangée R3 d'éléments de raccordement 7, intercalaire. Cette rangée R3 d'élément de raccordement permet éventuellement de constituer un couloir de maintenance, continue ou discontinue.

Les éléments de raccordement 7 (ou 7'), flottants, peuvent être mis bout-à-bout forment ainsi un couloir de maintenance, continue, sur lequel un opérateur peut se déplacer. La surface supérieure des éléments de raccordement 7 (ou 7'), destinée à être piétinée peut être striée, gaufrée ou présenter tout autre relief favorisant l'accroche. Alternativement, les éléments de raccordement 7 (ou 7') de la rangée R3 peuvent être espacés, les uns des autres, par exemple afin de former un couloir de maintenance discontinue.

Selon un mode de réalisation illustré à la figure 1, deux dispositifs supports 1 consécutifs appartenant à une même rangée R1 peuvent être écartés distants mutuellement au moyen d'un élément de raccordement 7, voire deux éléments de raccordement 7 en parallèle, entretoisant lesdits dispositifs 1 consécutifs.

A cet effet, par exemple, un élément de raccordement présente un élément de couplage fixé à un élément de couplage d'un dispositif support de la rangée R1 et un élément de couplage fixé à un élément de couplage du dispositif support consécutif, sur la même rangée R1.

L'espace libre, entre les deux dispositifs 1 supports consécutifs, autorise le montage du panneau photovoltaïque P de manière débordant, tel que décrit plus haut, selon la direction de la rangée R1.
Alternativement ou additionnellement, et dans le même objectif, deux dispositifs supports 1 consécutifs appartenant à une même rangée R4 peuvent être écartés distants au moyen d'un dispositif support 1, d'une rangée de dispositifs supports adjacente R5, entretoisant lesdits dispositifs 1 consécutifs.
La figure 1 illustre, selon un exemple de réalisation non limitatif, deux dispositifs supports 1, consécutifs, de la rangée R1 écartés et distants à l'aide de deux éléments de raccordement 7, entretoisant les dispositifs supports 1.
La figure 7 illustre, selon un autre exemple de réalisation non limitatif, deux dispositifs supports 1 consécutifs d'une même rangée écartés et distants à l'aide deux dispositifs supports 1 des deux rangées adjacentes.

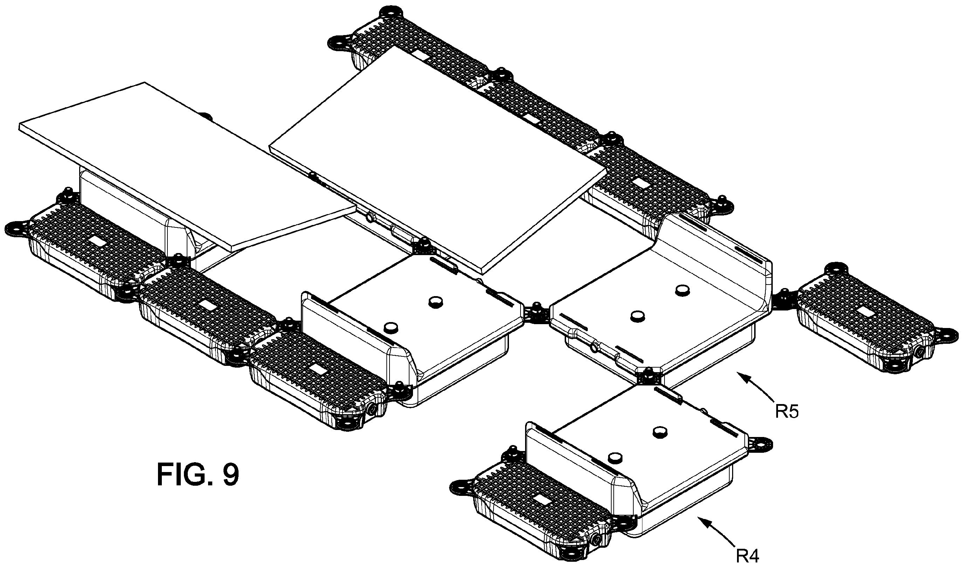

La figure 9 illustre, selon un autre exemple de réalisation non limitatif deux dispositifs supports 1 consécutifs d'une même rangée écartés et distants à l'aide d'un élément de raccordement et d'un dispositif support, entretoisant chacun les deux dispositifs consécutifs.

Selon l'exemple des figures 7 et 8, les dispositifs supports 1 sont assemblés directement par leurs éléments de couplage (i.e. leurs oreilles), à titre d'exemple selon une configuration en damier.

Les panneaux d'une même rangée de dispositifs supports sont de préférence parallèles, présentant une même inclinaison par rapport à la surface de l'eau. Les panneaux de la rangée adjacente de dispositifs peuvent être parallèles de même inclinaison, ou encore orientés selon un angle d'inclinaison opposé, selon la figure 8.

De préférence, les éléments de couplage 3 des dispositifs supports 1 et des éléments de raccordement sont configurés pour autoriser, d'une part, un assemblage de l'élément de raccordement en correspondance du dispositif support, et d'autre part, un assemblage de l'élément de raccordement entretoisant deux dispositifs supports.

Pour un assemblage en correspondance ; deux éléments de couplage notamment deux oreilles du dispositif support sont assemblés respectivement avec deux élément de couplage, notamment deux oreilles dudit élément de raccordement 7.

Pour un assemblage en entretoisement, l'un des éléments de couplage de l'élément de raccordement 7 est assemblé à un élément de couplage d'un premier dispositif 1 et un autre élément de couplage dudit élément de raccordement 7 est assemblé à un élément de couplage d'un second dispositif support 1. Eventuellement, ces deux types d'assemblage peuvent être combinés, tel qu'illustré à la figure 1.

D'une manière générale, ladite structure 2 et les flotteurs 4 et éventuellement les éléments 60,61 permettant l'inclinaison du panneau sont en matière plastique, ainsi que lesdits éléments de raccordement 7.

Ces différents éléments sont destinés à être assemblés sur site, rapidement, tel un jeu de construction et de préférence, sans outil. Ces éléments sont de préférence démontables aisément, de manière, lors de la maintenance, à pouvoir changer uniquement l'élément endommagé, rapidement.
Naturellement, d'autres modes de réalisation auraient pu être envisagés par l'homme du métier sans pour autant sortir du cadre de l'invention tel que défini ci-après.

### NOMENCLATURE

1. Dispositif flottant support de panneau,
2. Structure pour la transmission des efforts du réseau,
20. Corps creux (Structure),
21. Corps ajouré, notamment ajouté (Structure),
22.23.24, 25,26 Eléments (Structure),
3. Eléments de couplage,
30. Elément de couplage (Dispositif 1),
31. Elément de couplage (Elément de raccordement 7),
32. Oreilles,
34. Organes de verrouillage,
4. Flotteur,
40. Corps étanche semi-ouvert (en tronc de pyramide selon les figures 15 à 19)
41. Paroi supérieure,
42 à 45. Parois latérales d'une pyramide à quatre côtés,
5. Système vissage,
60,61. Eléments pour incliner le panneau photovoltaïque,
7. Eléments de raccordement (d'un seul tenant),
7' Elément de raccordement (en plusieurs parties),
70. Structure pour la transmission des efforts du réseau (Elément 7'),
71 Flotteur (Elément 7'),
10. Nervure de fixation (basse),
11. Nervure de fixation (haute),
12. Nervures de fixation,

Am. Allée de maintenance,
P. Panneau photovoltaïque,
R. Réseau de dispositifs flottants,
R1, R2 ; R4, R5. Rangées de dispositifs supports de panneau,
R3. Rangée intercalaire d'éléments de raccordement.

## Revendications

1. Equipement pour la réalisation d'une installation photovoltaïque comprenant des panneaux photovoltaïques (P), ainsi qu'une pluralité des dispositifs (1) supports de panneaux photovoltaïques, modulaires, aptes à être assemblés pour former un réseau de dispositifs flottants pour le support des panneaux photovoltaïques (P), chaque dispositif support de panneau modulaire, comprenant :
- une structure (2) comportant des éléments de couplage (3) à d'autres dispositifs flottants de manière à permettre la formation d'un réseau (R) de dispositifs flottants, ladite structure (2) étant un élément plastique, d'un seul tenant, ou un élément plastique résultant de l'assemblage de plusieurs éléments (22, 23, 24, 25, 26), de manière amovible,
- un ou plusieurs flotteurs (4), destiné(s) à assurer la flottaison du dispositif, solidarisé(s) à ladite structure (2), de manière amovible par un système de vissage (5), un système de sangle, ou encore un système de clipsage, le ou les flotteurs (4) étant solidarisés à la structure (2), en appui sur la sous-face de ladite structure (2),
- des éléments de maintien pour le maintien d'un unique panneau photovoltaïque (P), agencés de manière à assurer le montage du panneau photovoltaïque (P) débordant latéralement des deux côtés dudit dispositif,
et dans lequel ladite structure (2) est un élément distinct du ou desdits flotteurs (4) de telle façon à permettre la transmission des efforts entre les dispositifs flottants du réseau (R), sans transmettre les efforts du réseau au(x)dit(s) flotteurs (4).

2. Equipement selon la revendication 1, dans lequel ladite structure (2) est un élément plastique d'un seul tenant.

3. Equipement selon la revendication 2, dans lequel l'élément plastique est un corps creux (20), de préférence étanche.

4. Equipement selon l'une des revendications 2 ou 3 dans lequel l'élément plastique est un corps ajouré (21), par exemple grillagé.

5. Equipement selon la revendication 1, dans lequel ladite structure (2) résulte de l'assemblage de plusieurs éléments (22, 23, 24, 25, 26).

6. Equipement selon la revendication 5, dans lequel lesdits éléments (22, 23, 24, 25, 26) de la structure (2) sont assemblés par système de vissage, un système de sangle, ou encore un système de clipsage.

7. Equipement selon l'une des revendications 1 à 6, dans lequel lesdits éléments de couplage (3) comprennent des oreilles (32) saillantes.

8. Equipement selon la revendication 5 ou 6 et 7, dans lequel tout ou partie desdits éléments (22, 23 ,24, 25, 26, 27) de ladite structure (2) comprennent lesdites oreilles (32), tout ou partie des éléments (22, 23 ,24, 25, 26, 27) étant assemblés entre eux par l'intermédiaire d'oreilles (32), en regard, appartenant à au moins deux, distincts, desdits éléments (22,25 ;23,25 ;23,24 ;22,24...), et par l'intermédiaire d'un organe de verrouillage (34), tel qu'un boulon, traversant lesdites oreilles (32).

9. Equipement selon l'une des revendications 1 à 8, dans lequel la structure (2) est prévue débordant, latéralement, par rapport au(x)dit(s) flotteurs (4) et de manière continue sur le pourtour dudit flotteur ou desdits flotteurs.

10. Equipement selon l'une des revendications 1 à 9, présentant un ou plusieurs éléments supports (60, 61) pour incliner ledit au moins un panneau photovoltaïque (P) par rapport à la surface de l'eau.

11. Equipement selon l'une des revendications 1 à 10, dans lequel le ou chacun desdits flotteurs (4) est constitué par une enveloppe plastique, renfermant un volume d'air.

12. Equipement selon l'une des revendications 1 à 10, dans lequel le ou chacun desdits flotteurs est un élément gonflable.

13. Equipement selon l'une des revendications 1 à 10, dans lequel le ou chacun des flotteurs (4) comprend un corps (40) semi-ouvert en tronc de pyramide ou en tronc de cône, étanche, solidarisé à la structure de manière à former une poche ouverte vers le bas, piégeant un volume d'air.

14. Equipement selon l"une des revendications 1 à 13, comprenant, en outre, des éléments de raccordement (7) modulaires, flottants, ledit équipement présentant des éléments de couplage (3) répartis entre lesdits éléments de raccordement (7 ;7') et lesdits dispositifs supports (1) permettant l'assemblage entre eux desdits éléments de raccordement (1) et desdits dispositifs support (1).

15. Equipement selon la revendication 14, dans lequel chaque élément de raccordement (7) flottant est sous forme d'une enveloppe plastique présentant un volume intérieur permettant d'assurer la flottaison dudit élément de raccordement (7), ladite enveloppe présentant lesdits éléments de couplage (3).

16. Equipement selon la revendication 14, dans lequel chaque élément de raccordement (7) comprend :
- une structure (70) comportant lesdits éléments de couplage (3) aux dispositifs flottants (1) de manière à permettre la formation d'un réseau (R) de dispositifs flottants,
- un ou plusieurs flotteurs (71), destiné(s) à assurer la flottaison du dispositif, solidarisé(s) à ladite structure (70),
et dans lequel ladite structure (70) est un élément distinct du ou desdits flotteurs (71) de telle façon à permettre la transmission des efforts entre les dispositifs flottants (1,7) du réseau (R), sans transmettre les efforts du réseau au(x)dit(s) flotteurs (71).

17. Equipement selon l'une des revendications 1 à 16, dans lequel les éléments de couplage (3) sont des oreilles saillantes, ledit équipement comprenant des organes de verrouillage tels que goupilles ou boulons, destinés à traverser plusieurs oreilles mises en regard pour assurer le verrouillage de l'assemblage.

18. Système résultant de l'assemblage des dispositifs supports de l'équipement selon l'une des revendications 1 à 17, directement par l'intermédiaire de leurs éléments de couplage, ou indirectement par l'intermédiaire d'éléments de raccordement (7,7'), intercalaires, obtenant un réseau de dispositifs flottants.

19. Système selon la revendication 18 présentant au moins deux rangées (R1, R2) de dispositifs (1) supports de panneau, modulaires, lesdites deux rangées étant maintenues au moyen d'une rangée (R3) desdits éléments de raccordement (7), intercalaire.

20. Système selon la revendication 19, dans lequel deux dispositifs supports (1) consécutifs appartenant à une même rangée (R1) sont écartés distants mutuellement au moyen d'un élément de raccordement (7), voire deux éléments de raccordement (7) en parallèle, entretoisant lesdits dispositifs (1) consécutifs.

21. Système selon l'une des revendications 18 à 20, dans lequel deux dispositifs supports (1) consécutifs appartenant à une même rangée (R4) sont écartés distants au moyen d'un dispositif (1) support de panneau, modulaire, appartenant à une rangée adjacente (R5) de dispositifs supports, entretoisant lesdits dispositifs supports (1) consécutifs.

22. Système selon la revendication 18, dans lequel les structures (2) desdits dispositifs supports (1) sont de dimension surabondante par rapport aux dimensions des panneaux photovoltaïques (P) portés par les structures (2), configurées de sorte que les parties surabondantes des structures (2) appartenant à une même rangée de dispositifs supports du réseau (R) forment une allée de maintenance (Am) pour les opérateurs.

23. Utilisation de l'équipement selon l'une des revendications 1 à 17 ou du système selon l'une des revendications 18 à 22 pour la réalisation d'une installation photovoltaïque flottante.

## Patentansprüche

1. Einrichtung zum Herstellen einer Fotovoltaikanlage, aufweisend Fotovoltaikmodule (P) sowie mehrere sogenannte Trägervorrichtungen (1) für modulare Fotovoltaikmodule, die zusammengefügt werden können, um ein Netzwerk von schwimmenden Vorrichtungen zum Tragen der Fotovoltaikmodule (P) zu bilden,
wobei jede Trägervorrichtung für ein modulares Modul aufweist:
- eine Struktur (2), die Kopplungselemente (3) zum Koppeln mit anderen schwimmenden Vorrichtungen aufweist, um die Bildung eines Netzwerks (R) aus schwimmenden Vorrichtungen zu ermöglichen, wobei die Struktur (2) ein einstückiges Kunststoffelement ist oder ein Kunststoffelement, das aus dem lösbaren Zusammenfügen von mehreren Elementen (22, 23, 24, 25, 26) entsteht,
- ein oder mehrere Schwimmkörper (4), der (die) dazu bestimmt ist (sind), die Schwimmfähigkeit der Vorrichtung sicherzustellen, die mit der Struktur (2) durch ein Schraubsystem (5), ein Gurtsystem oder auch ein Klippsystem auf lösbare Weise fest verbunden ist, wobei der oder die Schwimmkörper (4) fest mit der Struktur (2), auf der Unterseite der Struktur (2) aufliegend, verbunden ist (sind),
- Halteelemente zum Halten eines einzigen Fotovoltaikmoduls (P), die angeordnet sind, um die Montage des Fotovoltaikmoduls (P) sicherzustellen, das auf beiden Seiten der Vorrichtung seitlich übersteht,
und wobei die Struktur (2) ein Element ist, das von dem oder den Schwimmkörpern (4) getrennt ist, um die Übertragung der Kräfte zwischen den schwimmenden Vorrichtungen des Netzwerks (R) zu ermöglichen, ohne die Kräfte des Netzwerks auf den (die) Schwimmkörper (4) zu übertragen.

2. Einrichtung nach Anspruch 1, wobei die Struktur (2) ein einstückiges Kunststoffelement ist.

3. Einrichtung nach Anspruch 2, wobei das Kunststoffelement ein vorzugsweise dichter Hohlkörper (20) ist.

4. Einrichtung nach einem der Ansprüche 2 oder 3, wobei das Kunststoffelement ein zum Beispiel gitterförmig perforierter Körper (21) ist.

5. Einrichtung nach Anspruch 1, wobei die Struktur (2) aus dem Zusammenfügen mehrerer Elemente (22, 23, 24, 25, 26) entsteht.

6. Einrichtung nach Anspruch 5, wobei die Elemente (22, 23, 24, 25, 26) der Struktur (2) durch ein Schraubsystem, ein Gurtsystem oder auch ein Klippsystem zusammengefügt werden.

7. Einrichtung nach einem der Ansprüche 1 bis 6, wobei die Kopplungselemente (3) vorstehende Laschen (32) aufweisen.

8. Einrichtung nach Anspruch 5 oder 6 und 7, wobei alle oder ein Teil der Elemente (22, 23, 24, 25, 26, 27) der Struktur (2) diese Laschen (32) aufweisen, wobei alle oder ein Teil der Elemente (22, 23, 24, 25, 26, 27) mittels einander gegenüberliegender Laschen 32), die zu mindestens zwei verschiedenen aus den Elementen (22, 25; 23, 25; 23, 24; 22, 24...) gehören, und mittels eines Verriegelungselements (34), wie beispielsweise eines Bolzens, der durch die Laschen (32) hindurchgeschoben wird, miteinander verbunden werden.

9. Einrichtung nach einem der Ansprüche 1 bis 8, wobei die Struktur (2) in Bezug auf den (die) Schwimmkörper (4) seitlich und durchgehend über den Umfang des Schwimmkörpers oder der Schwimmkörper überstehend vorgesehen ist.

10. Einrichtung nach einem der Ansprüche 1 bis 9, die einen oder mehrere Trägerelemente (60, 61) aufweist, um das mindestens eine Fotovoltaikmodul (P) in Bezug auf die Wasseroberfläche zu neigen.

11. Einrichtung nach einem der Ansprüche 1 bis 10, wobei der oder jeder der Schwimmkörper (4) aus einer Kunststoffhülle besteht, die ein Luftvolumen einschließt.

12. Einrichtung nach einem der Ansprüche 1 bis 10, wobei der oder jeder der Schwimmkörper ein aufblasbares Element ist.

13. Einrichtung nach einem der Ansprüche 1 bis 10, wobei der oder jeder der Schwimmkörper (4) einen halboffenen Körper (40) in Form eines Pyramidenstumpfs oder Kegelstumpfs aufweist, der dicht und fest mit der Struktur verbunden ist, um eine nach unten offene Tasche zu bilden, die ein Luftvolumen einfängt.

14. Einrichtung nach einem der Ansprüche 1 bis 13, die ferner schwimmende modulare Verbindungselemente (7) aufweist, wobei die Einrichtung Kopplungselemente (3) aufweist, die zwischen den Verbindungselementen (7; 7') und den Trägervorrichtungen (1) verteilt sind, damit die Verbindungselemente (1) und die Trägervorrichtungen (1) miteinander verbunden werden können.

15. Einrichtung nach Anspruch 14, wobei jedes schwimmende Verbindungselement (7) in Form einer Kunststoffhülle vorliegt, die ein Innenvolumen aufweist, das es ermöglicht, die Schwimmfähigkeit des Verbindungselements (7) sicherzustellen, wobei die Hülle die Kopplungselemente (3) aufweist.

16. Einrichtung nach Anspruch 14, wobei jedes Verbindungselement (7) aufweist:
- eine Struktur (70), die die Elemente (3) zum Ankoppeln an die schwimmenden Vorrichtungen (1) aufweist, um die Bildung eines Netzwerks (R) aus schwimmenden Vorrichtungen zu ermöglichen,
- einen oder mehrere Schwimmkörper (71), der (die) dazu bestimmt ist (sind), die Schwimmfähigkeit der Vorrichtung sicherzustellen, der (die) fest mit der Struktur (70) verbunden ist (sind),
und wobei die Struktur (70) ein Element ist, das von dem Schwimmkörper oder den Schwimmkörpern (71) getrennt ist, um die Übertragung der Kräfte zwischen den schwimmenden Vorrichtungen (1, 7) des Netzwerks (R) zu ermöglichen, ohne die Kräfte des Netzwerks auf den (die) Schwimmkörper (71) zu übertragen.

17. Einrichtung nach einem der Ansprüche 1 bis 16, wobei die Kopplungselement (3) vorstehende Laschen sind, wobei die Einrichtung Verriegelungselement aufweist, wie beispielsweise Stifte oder Bolzen, die dazu bestimmt sind, durch mehrere einander gegenüber angeordnete Laschen hindurchgeschoben zu werden, um die Verriegelung der Anordnung sicherzustellen.

18. System, das aus dem Zusammenfügen der Trägervorrichtungen der Einrichtung nach einem der Ansprüche 1 bis 17 direkt oder mittels ihrer Kopplungselemente oder indirekt mittels eingefügter Verbindungselemente (7,7') entsteht, wodurch ein Netzwerk von schwimmenden Vorrichtungen erhalten wird.

19. System nach Anspruch 18, das mindestens zwei Reihen (R1, R2) von Trägervorrichtungen (1) für modulare Module aufweist, wobei die beiden Reihen mittels einer Reihe (R3) der eingefügten Verbindungselemente (7), gehalten werden.

20. System nach Anspruch 19, wobei zwei nebeneinander angeordnete Trägervorrichtungen (1), die zur gleichen Reihe (R1) gehören, voneinander mittels eines Verbindungselements (7) oder sogar zwei parallelen Verbindungselementen (7) beabstandet sind, die die nebeneinander angeordneten Vorrichtungen (1) versteifen.

21. System nach einem der Ansprüche 18 bis 20, wobei zwei nebeneinander angeordnete Trägervorrichtungen, die zur gleichen Reihe (R4) gehören, mittels einer Trägervorrichtung (1) für ein modulares Modul, das zu einer benachbarten Reihe (R5) von Trägervorrichtungen gehört, beabstandet sind, die die nebeneinander angeordneten Trägervorrichtungen (1) versteifen.

22. System nach Anspruch 18, wobei die Strukturen (2) der Trägervorrichtungen (1) eine überdimensionierte Abmessung in Bezug auf die Abmessungen der Fotovoltaikmodule (P) haben, die von den Strukturen (2) getragen werden, die derart konfiguriert sind, dass die überdimensionierten Teile der Strukturen (2), die zu einer gleichen Reihe von Trägervorrichtungen des Netzwerks (R) gehören, einen Wartungssteg (Am) für die Bediener bilden.

23. Verwendung der Einrichtung nach einem der Ansprüche 1 bis 17 oder des Systems nach einem der Ansprüche 18 bis 22 zum Herstellen einer schwimmenden Fotovoltaikanlage.

## Claims

1. Equipment for the carrying out of a photovoltaic installation comprising photovoltaic panels (P), as well as a plurality of modular support devices (1) for a photovoltaic panel, able to be assembled in order to form a network of floating devices for the support of photovoltaic panels (P),
each modular panel support device comprising:
- a structure (2) comprising coupling elements (3) for coupling to other floating devices in such a way as to allow a network (R) of floating devices to be formed, said structure (2) being a plastic element, of a single piece, or a plastic element resulting from the assembly of several elements (22, 23, 24, 25, 26), in a removable manner,
- one or a plurality of floats (4), intended to ensure that the device does float, which are connected to said structure (2), in a removable manner by a screwing system (5), a strap system, or a snap-fit system, the float or floats (4) being connected to the structure (2), bearing on the under-face of said structure (2),
- elements for holding a single photovoltaic panel (P), arranged in such a way as to allow for the mounting of the photovoltaic panel (P) overhanging laterally the two sides of said device,
and wherein said structure (2) is an element separate from the float or floats (4) in such a way as to allow for the transmission of forces between floating devices of the network (R), without transmitting the forces of the network to said float or floats (4).

2. Equipment according to claim 1, wherein said structure (2) is a plastic element of a single piece.

3. Equipment according to claim 2, wherein the plastic element is a hollow body (20), preferable sealed.

4. Equipment according to one of claims 2 or 3 wherein the plastic element is a perforated body (21), for example latticed.

5. Equipment according to claim 1, wherein said structure (2) results from the assembly of several elements (22, 23, 24, 25, 26).

6. Equipment according to claim 5, wherein said elements (22, 23, 24, 25, 26) of the structure (2) are assembled by a screwing system, a strap system, or a snap-fit system.

7. Equipment according to one of claims 1 to 6, wherein said coupling elements (3) comprise protruding lugs (32).

8. Equipment according to claim 5 or 6 and 7, wherein all or a portion of said elements (22, 23, 24, 25, 26, 27) of said structure (2) comprise said lugs (32), with all or a portion of the elements (22, 23, 24, 25, 26, 27) being assembled together by the intermediary of facing lugs (32), belonging to at least two, separate, from said elements (22, 25; 23, 25; 23, 24; 22, 24, etc.), and by the intermediary of a locking member (34), such as a bolt, passing through said lugs (32).

9. Equipment according to one of claims 1 to 8, wherein the structure (2) is provided as overhanging, laterally, with respect to said float or floats (4) and continuously over the periphery of said float or said floats.

10. Equipment according to one of claims 1 to 9, having one or several support elements (60, 61) in order to incline said at least one photovoltaic panel (P) with respect to the surface of the water.

11. Equipment according to one of claims 1 to 10, wherein the or each one of the floats (4) is constituted by a plastic envelope, enclosing a volume of air.

12. Equipment according to one of claims 1 to 10, wherein the or each one of the floats is an inflatable element.

13. Equipment according to one of claims 1 to 10, wherein the or each one of the floats (4) comprises a semi-open body (40) as a frustum pyramid or as a truncated cone, sealed, rigidly connected to the structure in such a way as to form a pocket opened downwards, trapping a volume of air.

14. Equipment according to one of claims 1 to 13, further comprising modular floating connection elements (7), said equipment having coupling elements (3) distributed between said connection elements (7; 7') and said support devices (1) allowing for the assembly between them of said connection elements (1) and of said support devices (1).

15. Equipment according to claim 14, wherein each floating connection element (7) is in the form of a plastic envelope that has an interior volume making it possible to ensure that said connection element does float (7), said envelope having said coupling elements (3).

16. Equipment according to claim 14, wherein each connection element (7) comprises:
- a structure (70) comprising said coupling elements (3) for coupling to floating devices (1) in such a way as to allow the formation of a network (R) of floating devices,
- one or several floats (71), intended to ensure that the device does float, which are rigidly connected to said structure (70),
and wherein said structure (70) is an element separate from the float or floats (71) in such a way as to allow for the transmission of forces between floating devices (1, 7) of the network (R), without transmitting the forces of the network to said float or floats (71).

17. Equipment according to one of claims 1 to 16, wherein the coupling elements (3) are protruding lugs, said equipment comprising locking members such as pins or bolts, intended to pass through several lugs placed facing in order to ensure the locking of the assembly.

18. System resulting from the assembly of support devices for equipment according to one of claims 1 to 17, directly by the intermediary of their coupling elements, or indirectly by the intermediary of inserted connection elements (7, 7'), obtaining a network of floating devices.

19. System according to claim 18 having at least two rows (R1, R2) of modular panel support devices (1), said two rows being maintained by means of a row (R3) of said inserted connection elements (7).

20. System according to claim 19, wherein two consecutive support devices (1) belonging to the same row (R1) are separated mutually by means of a connection element (7), even two connection elements (7) in parallel, bracing said consecutive devices (1).

21. System according to one of claims 18 to 20, wherein two consecutive support devices (1) belonging to the same row (R4) are separated by means of a modular panel support device (1), belonging to an adjacent row (R5) of support devices, bracing said consecutive support devices (1).

22. System according to claim 18, wherein the structures (2) of said support devices (1) are of overabundant dimension with respect to the dimensions of the photovoltaic panels (P) borne by the structures (2), configured in such a way that the overabundant portions of the structures (2) belonging to the same row of support devices of the network (R) form an alley for maintenance (Am) for the operators.

23. Use of the equipment according to one of claims 1 to 17 or of the system according to one of claims 18 to 22 for the carrying out of a floating photovoltaic installation.
